# EUROPEAN PATENT APPLICATION

(11) **EP 1 136 924 A1**
(43) Date of publication of application: **26.09.2001**
(21) Application number: 00106123.3
(22) Date of filing: 21.03.2000
(51) Int. Cl.: G06F 17/60

(54) **Distributed data accessing technique**

(71) Applicant: CheckFree Corporation, Norcross, Georgia 30092 (US)
(72) Inventor: Ganesan, Ravi, Norcross, Georgia 30092 (US); Harris, Mark Todd, Alpharetta, Georgia 30202 (US); Dreyer, Hans Daniel, Gahanna Ohio 43230 (US); Wolfe, Kathryn Randall, Westerville, Ohio 43081 (US)
(74) Representative: Schurack, Eduard F.

(57) **Abstract**

A distributed data accessing technique is disclosed. The technique is realized by storing, at a first network station, information identifying data which is available at a second network station, the second network station being different than the first network station. A signal is generated at the first network station representing the information identifying the available data and linking information to the second network station. The signal is transmitted to a third network station, the third network station being different than the first and the second network stations. The transmitted linking information is operable at the third network station to establish a network link over which the identified available data is transmittable from the second network station to the third network station.

## Description

### FIELD OF THE INVENTION

The present invention relates generally to distributed data networks and, more particularly, to a distributed data accessing technique.

### BACKGROUND OF THE INVENTION

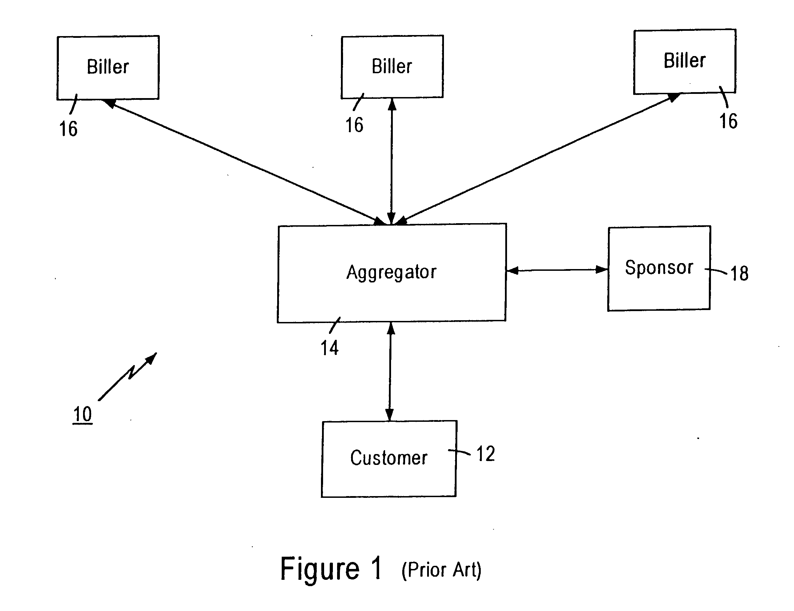

There are two prevalent models for electronic bill presentment that are currently used in industry. The first is an aggregation model 10, which is shown in Figure 1. In its simplest form, the aggregation model 10 includes a customer 12, an aggregator 14, and a plurality of billers 16. The customer 12 can be, for example, an individual person, a family, or a business. The aggregator 14 can be a financial institution (FI) such as, for example, a bank. Alternatively, the aggregator 14 can be a separate entity which acts of behalf of a sponsor 18, which can also be an FI such as a bank. Each biller 16 can be of any billing institution type such as, for example, a local telephone company, a local electric company, a retail outlet, or a national long distance telephone company.

Each biller 16 provides customer-related invoice data to the aggregator 14. The aggregator 14 serves as an intermediary between each biller 16 and the customer 12 by providing bill presentment directly to the customer 12.

There are two variants of the aggregation model 10 resulting from the ownership, or "branding", of the presentation experience and the communication channel between the aggregator 14 and the customer 12. In one variant, the aggregator 14 may offer aggregator-branding, thus totally owning both the presentation experience and the communication channel between the aggregator 14 and the customer 12. In the other variant, the aggregator 14 may offer sponsor-branding, thus staying "behind the scenes" in terms of the presentation experience and supporting the communication channel between the aggregator 14 and the customer 12.

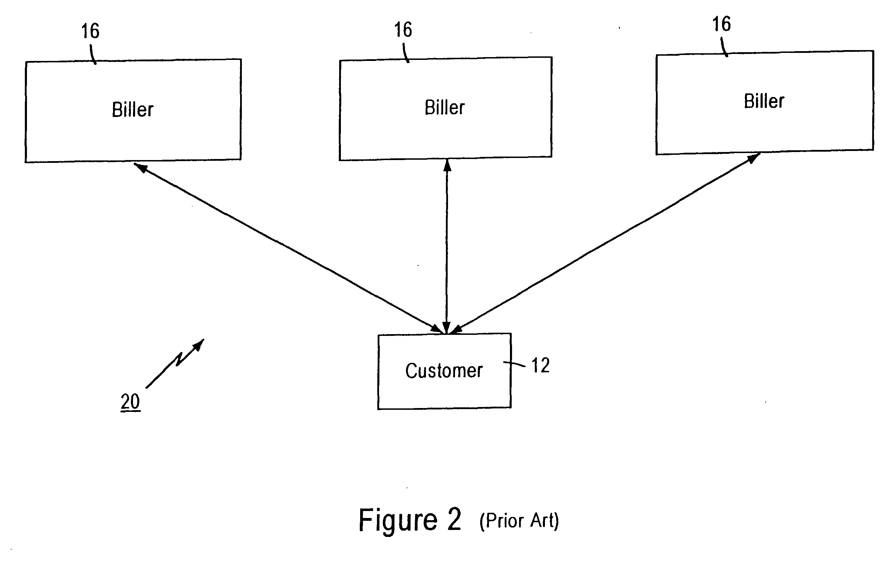

The second prevalent model for electronic bill presentment is a biller direct model 20, which is shown in Figure 2. In its simplest form, the biller direct model 20 includes a customer 12 and at least one biller 16. In the biller direct model 20, each biller 16 retains the customer-related invoice data and the full relationship with the customer 12, i.e., the presentation experience and the communication channel. The customer 12 may have software for providing a capability similar to Web browser bookmarking so as to allow easy navigation between billers, and thus some level of virtual aggregation. However, there is no actual aggregation such as with the aggregator 14 of the aggregation model 10 described above.

The above-described models present a dichotomy between a sponsor-centric view and a biller-centric view of bill presentment. That is, the aggregation model 10 allows the aggregator 14 and/or the sponsor 18 to use customer-related invoice data, bill presentment, and the communication channel between the aggregator 14 and the customer 12 for cross-selling or other peripheral services. The biller direct model 20, on the other hand, insures that control of customer-related invoice data, bill presentment, and the communication channel between the biller 16 and the customer 12 remains with the biller 16.

Also, neither of the above-described models adopt a truly customer-centric view. That is, neither of the above-described models allow a customer 12 to interact directly with individual billers 16 while retaining the benefits of interacting with a single aggregator 14, such as the ability to retain a single authentication and log-in procedure and a common bill presentation framework. Further, neither of the above-described models allow a customer 12 to retain the benefits of interacting with a single aggregator 14 while allowing the aggregator 14, billers 16, and sponsor 18 to retain certain preferences, such as the ability to retain control of customer-related data and a communication channel with each customer 12. Accordingly, it would be desirable to provide a distributed data accessing technique which addresses the above-mentioned shortcomings of the above-described models.

### OBJECTS OF THE INVENTION

One object of the present invention is to provide a distributed data accessing technique that allows a customer to interact directly with individual billers while retaining the benefits of interacting with a single aggregator.

Another object of the present invention is to provide a distributed data accessing technique that allows a customer to retain the benefits of interacting with a single aggregator while allowing the aggregator, billers, and sponsor to retain control of customer-related data and a communication channel with each customer.

Another object of the present invention is to provide a distributed data accessing technique that allows complete flexibility as to who is offering bill presentment: billers only, aggregator only, or some combination of the above.

Another object of the present invention is to provide a distributed data accessing technique that supports an audit trail which can serve any of a variety of purposes, including improved customer care.

The above-stated objects, as well as other objects, features, and advantages, of the present invention will become readily apparent from the following detailed description which is to be read in conjunction with the appended drawings.

### SUMMARY OF THE INVENTION

According to the present invention, a distributed data accessing technique is realized by storing, at a first network station, information identifying data which is available at a second network station. The first network station can be, for example, an electronic payment and customer service entity. The second network station can be, for example, a billing entity such as a utility company. The information identifying the data that is available at the second network station can be, for example, information which indicates that a bill is available at the second network station.

A signal is generated at the first network station. The signal represents the information identifying the available data at, and linking information to, the second network station. The linking information can be, for example, a web site address along with some additional parameters.

The signal is transmitted to a third network station. The third network station can be, for example, a user entity such as a personal computer. The transmitted linking information is operable at the third network station to establish a network link over which the identified available data is transmittable from the second network station to the third network station. That is, the third network station can invoke the linking information so as to create, for example, a link to the web site of a billing entity.

The signal is typically generated in response to a request for data. Such a request can include an identification of a user so that the user can be authenticated. The signal is then generated after the user is authenticated. The request is typically received from the third network station. The request, as well as any other events that occur between the various network stations, can be logged at the first network station. The logged events can then be accessed by another entity, such as, a centralized customer service center, which could be a fourth network station.

The identified available data is typically stored at the second network station. This data could, if desired, be provided to the second network station by an entity located outside of the network, such as a legacy billing system or an established billing aggregator.

According to other aspects of the invention, the first network station receives a notification that the identified available data was transmitted from the second network station to the third network station. The identified available data is preferably transmitted from the second network station directly to the third network station over the network link established between the second and third network stations as discussed above. The identified available data can then be transmitted from the second network station to the third network station so as to be displayed in a presentation format. The presentation format can be, for example, an internet web page or a frame of an internet web page.

Preferably, only a single authentication procedure is required for a user entity to receive available data identifying information and linking information for different data available a different sites, e.g. different bills at different biller sites.

### BRIEF DESCRIPTION OF THE DRAWINGS

In order to facilitate a fuller understanding of the present invention, reference is now made to the appended drawings. These drawings should not be construed as limiting the present invention, but are intended to be exemplary only.

Figure 1 is an aggregation model for electronic bill presentment.

Figure 2 is a biller direct model for electronic bill presentment.

Figure 3 is an infrastructure diagram of a distributed database entity in accordance with the present invention.

Figure 4 is a schematic diagram of an electronic bill presentment and payment system in accordance with the present invention.

Figure 5 is a schematic diagram of an electronic payment and customer service (EPCS) entity in accordance with the present invention.

Figure 6 is a schematic diagram of the electronic bill presentment and payment system shown in Figure 4, extended to include certain associated directly related systems.

Figure 7 is a schematic diagram of the electronic bill presentment and payment system shown in Figure 4, extended to include certain associated indirectly related systems.

Figure 8 is a schematic diagram of the electronic bill presentment and payment system shown in Figure 4, extended to include certain associated customer care entities.

Figure 9 is a schematic diagram of the electronic bill presentment and payment system shown in Figure 4, extended to include a centralized customer care entity.

Figure 10 is a flowchart diagram showing initial sign-on data and message flows between a user entity and a banking entity in the electronic bill presentment and payment system shown in Figure 4.

Figure 11 is a flowchart diagram showing sign-on and authentication data and message flows between a user entity, a banking entity, and an EPCS entity in the electronic bill presentment and payment system shown in Figure 4.

Figure 12 is a flowchart diagram showing bill availability data and message flows between a user entity, a banking entity, and an EPCS entity in the electronic bill presentment and payment system shown in Figure 4.

Figure 13A is a flowchart diagram showing billing entity presentment data and message flows between a user entity, a billing entity, and an EPCS entity in the electronic bill presentment and payment system shown in Figure 4.

Figure 13B is a flowchart diagram showing billing aggregator bill presentment data and message flows between a user entity, a billing entity, an EPCS entity, and an established billing aggregator in the electronic bill presentment and payment system shown in Figure 4.

Figure 13C is a flowchart diagram showing alternative system bill presentment data and message flows between a user entity, an EPCS entity, and an alternative bill presentment and payment system in the electronic bill presentment and payment system shown in Figure 4.

Figure 14 is a flowchart diagram showing bill payment data and message flows between a user entity, an EPCS entity, and a billing entity in the electronic bill presentment and payment system shown in Figure 4.

Figure 15 is a flowchart diagram showing bill remittance and debiting data and message flows between an EPCS entity and a billing entity and a banking entity in the electronic bill presentment and payment system shown in Figure 4.

Figure 16 shows an example of a branded interface having a sign-on request prompt that includes a username field and a password field.

Figure 17 shows an example of a banking entity home page, including a "view bills" icon, a "view checking account" icon, and a "view savings account" icon.

Figure 18 shows a first modified banking entity home page having a frame presenting new bill availability data.

Figure 19 shows a second modified banking entity home page having a frame presenting detailed bill data.

Figure 20 is a flowchart diagram showing customer service data and message flows between a centralized customer service center, and an EPCS entity, a billing entity, and a banking entity in the electronic bill presentment and payment system shown in Figure 4.

### DETAILED DESCRIPTION OF A PREFERRED EMBODIMENT

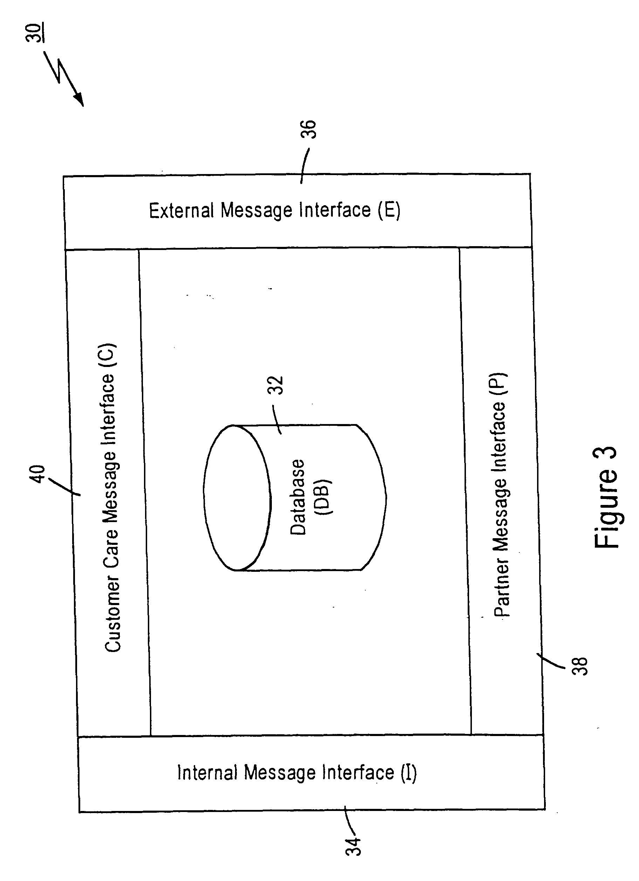

Referring to Figure 3, there is shown an infrastructure diagram of a distributed database entity 30 in accordance with the present invention. The distributed database entity 30 comprises a database component 32 and a plurality of message interfaces 34-40 for facilitating communication between the database component 32 and other distributed database entities and system components. The database component 32 typically contains data that is controlled or "owned" by the controller or "owner" of the distributed database entity 30. For example, if the distributed database entity 30 is owned by a financial institution (FI) such as a bank, then the database component 32 could contain information such as checking and savings account balances. It should be noted, however, that the database component 32 can also contain data from other distributed database entities and system components, as will be described in detail below.

The plurality of message interfaces 34-40 includes an internal message interface 34, an external message interface 36, a partner message interface 38, and a customer care message interface 40.

The internal message interface 34 defines messages that are used to communicate and query data between the distributed database entity 30 and other distributed database entities, or other system components having an internal message interface. For example, in a bill presentment and payment- system, communication between a banking entity and a billing entity may be required.

The external message interface 36 defines messages that are used to communicate and query data between the given distributed database entity 30 and any existing system(s) that are directly related to the distributed database entity 30. For example, an FI such as a bank can have an existing direct deposit account (DDA) system.

The partner message interface 38 defines messages that are used to communicate and query data between the distributed database entity 30 and any existing system(s) that are indirectly related to the given distributed database entity 30. For example, in a bill presentment and payment system, communication with an established billing aggregator may be necessary to satisfy customer demands.

The customer care message interface 40 defines messages that are used to communicate and query data between the given distributed database entity 30 and a customer care entity. For example, in a bill presentment and payment system, a billing entity may allow a third party to access bill data in order to provide feedback to bill customers.

It should be noted that all of the above-described interfaces will be described in greater detail below.

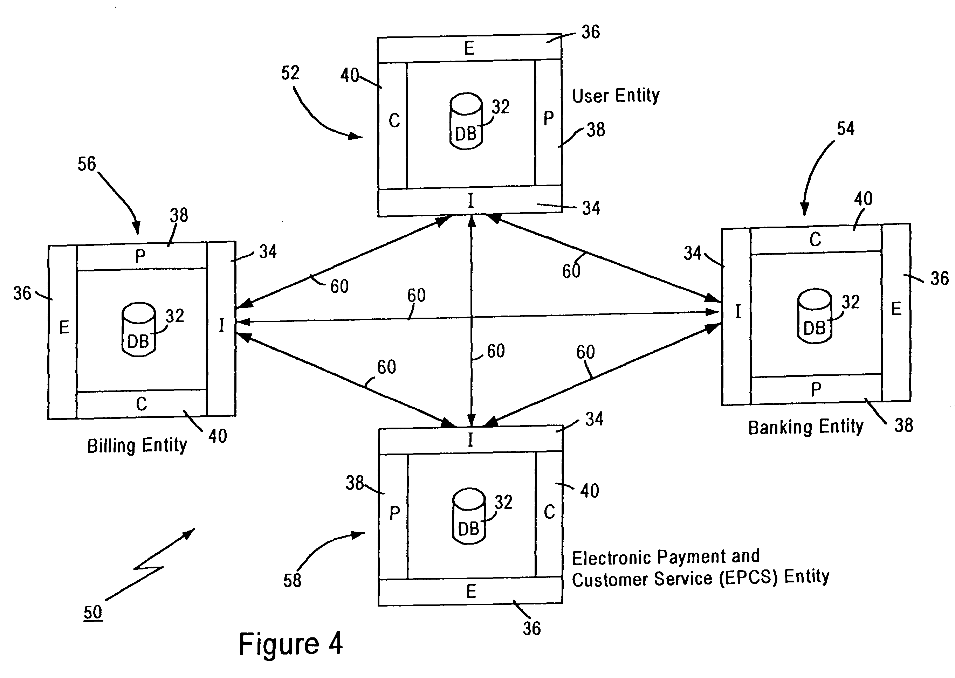

Referring to Figure 4, there is shown a schematic diagram of a versatile electronic bill presentment and payment system 50 in accordance with the present invention. The system 50 includes a user entity 52, a banking entity 54, a billing entity 56, and an electronic payment and customer service (EPCS) entity 58. For purposes of this detailed description, each of entities 52, 54, 56 and 58 is similar to the distributed database entity 30, as described above, but could, if desired, have only an internal message interface 34 so that communications can take place between each entity.

It should be noted that, although only a single user entity 52, banking entity 54, billing entity 56, and EPCS entity 58 are shown in the system 50, a plurality of each of these entities may exist in an actual versatile electronic bill presentment and payment system in accordance with the present invention. Since the entities 52, 54, 56 and 58 are all distributed database entities, they all communicate through internal message interfaces 34. These communications are performed over interconnections 60, which can be wire, optical fiber, or wireless interconnections.

Each internal message interface 34, external message interface 36, partner message interface 38, and customer care message interface 40, can be implemented using any number of existing message-based communication systems such as, for example, a TCP/IP message-based communication system running on the infrastructure of the internet. Alternatively, the interfaces 34, 36, 38 and 40 could be implemented using proprietary messaging software on a private network or intranet. It should also be noted that there are no requirements as to the nature of the messaging protocol, or any middleware used to support the messaging.

### THE USER ENTITY

The user entity 52 is typically a personal computer (PC) that is directly connected to the system 50, or is connected to the system 50 through a network server (not shown). Thus, the database component 32 associated with the user entity 52 can be located on the PC, e.g., a traditional "fat" client, or on the network server, e.g., an HTML browser client. It should be noted that the database component 32 associated with the user entity 52 could, if desired, also be located in one or distributed among all of the other distributed database entities, which can download data to the user entity 52, e.g., a Java client. Thus, each database component 32 should not be thought of as a single, monolithic database. Rather, each database component 32 is better described as a distributed repository of data categorized by the entity that "owns" the data.

Wherever it is located, the database component 32 associated with the user entity 52 stores data that is related to the type of user interface (UI) that is being presented to a subscriber of the system 50. For example, the database component 32 associated with the user entity 52 can store data that is related to the particular type of presentation technology being used, e.g., a "fat" client, an HTML browser client, or a Java client, a specific application, or a particular version of an application. The database component 32 associated with the user entity 52 can also store data that is related to a particular computing session, such as the existence of a computing session and/or the duration of a computing session, and subscriber authentication data, which is described in detail below.

The main function of the user entity 52 is to build a UI using data obtained from the other distributed database entities, and then present the UI to a subscriber of the system 50. The presentation of the UI to a subscriber is dependent upon the particular type of presentation technology being used, e.g., a "fat" client, an HTML browser client, or a Java client. For example, a UI for a Java client requires that presentation data be downloaded from one of the other distributed database entities.

Other functions of the user entity 52 include storing certain data locally so as to facilitate off-line editing and viewing, maintaining a state in a connectionless environment, e.g., an HTTP environment, and sensing the availability of software updates and managing their subsequent application. All of these functions depend on the nature of the client, e.g., a "fat" client, an HTML browser client, or a Java client. Another function of the user entity 52 is storing subscriber authentication data, e.g., a security ticket that is used to gain access to other distributed database entities in the system 50.

### THE BANKING ENTITY

The banking entity 54, which is typically an FI, such as a bank, is generally viewed as a primary point of contact for a subscriber to the system 50, typically providing an appearance of aggregation to the subscriber. This is primarily due to the trust that consumers typically place in a bank brand, and the fact that bank customers who already bank online are also likely to want to receive bills online. Thus, in the following discussion, the banking entity 54 is assumed to be the aggregator of the system 50.

It should be noted, however, that any one of the other entities could also be the aggregator of the system 50 in accordance with the present invention. There are several factors which can be used to determine aggregator status such as market clout.

The banking entity 54 typically gains access to the system 50 through a network server (not shown). Thus, the database component 32 associated with the banking entity 54 can be located in the network server, but could also be located in a system associated with the banking entity 54, such as a DDA system. Such a DDA system could be accessed through the external message interface 36 of the banking entity 54, as described in detail below. The database component 32 associated with the banking entity 54 could, if desired, also be located in one, or be distributed among all, of the other distributed database entities.

Wherever it is located, the database component 32 associated with the banking entity 54 stores bank-specific subscriber profile data profile such as, for example, subscriber names and addresses and subscriber account numbers. The database component 32 can also store account information, such as static account information, e.g., lease rate, principle, and dynamic account information, e.g., balance, and profile data specifically associated with the FI, such as graphics, business rules, banking-related transaction histories, and aggregation relationships, e.g. those between the FI and billers.

Since it is likely that the system 50 will be used with existing banking systems, such as an existing DDA system, one of the main functions of the banking entity 54 is the continuation of current banking and bill payment functionality, including maintaining customer profiles and already existing interfaces. In its role as aggregator, the banking entity 54 also provides data to the user entity 52 to be used for the creation of a navigation portion of a UI. For an HTML browser client, this data would be used to create a navigation frame, but not a content specific frame. The banking entity 54 can also provide data to the user entity 52 to be used for the creation of a UI for traditional banking and bill payment.

Since the banking entity 54 is generally viewed as the primary point of contact for a subscriber to the system 50, the banking entity 54 also functions as the likely, but not exclusive, entry point for subscriber sign-on. Thus, the banking entity 54 typically controls the sign-on and authentication procedures for subscribers using the user entity 52. It should be noted that the banking entity 54 typically works in conjunction with the EPCS entity 58 in controlling the authentication procedure, as described in detail below.

Another function of the banking entity 54 includes tracking bank related events and storing them in an event tracking database, which is typically associated with the EPCS entity 58, as will also be described in detail below.

### THE BILLING ENTITY

The billing entity 56 is commonly a biller such as, for example, a utility company. The billing entity 56 typically gains access to the system 50 through a network server (not shown). Thus, the database component 32 associated with the billing entity 56 can be located in the network server. However, if desired, the database component could also be located in a system associated with the billing entity 56, such as a legacy billing system, or in one or among all of the other distributed database entities. Such a legacy billing system could be accessed through the external message interface 36 of the billing entity 56, as described in detail below.

Wherever it is located, the database component 32 associated with the billing entity 56 stores biller-specific subscriber profile data, such as subscriber names and addresses and subscriber account numbers and types, e.g., business vs. residential phone line. The database component 32 also stores billing data for use by the user entity 52 in building the UI for the subscriber. The billing data can include bill availability data, detailed billing data, ads and other cross-sale displays and links, and bill payment terms and conditions.

The database component 32 associated with the billing entity 56 can also store biller transaction history, such as bill data manipulation, e.g., viewing, searching, and sorting, as well as cross-sell events. The database component 32 can further store biller profile data, such as graphics, business rules, and relationships with aggregators such as banks.

The main function of the billing entity 56 is to provide billing data to the user entity 52 for use in creating the UI for the subscriber. The billing entity 56 also provides bill availability data to an aggregator database, whether it is located in the banking entity 54, the EPCS entity 58, or another entity, for use in providing notice of bill availability to subscribers. The billing entity 56 can also access legacy billing systems through the external message interface 36 of the billing entity 56, as indicated above.

Another function of the billing entity 56 is tracking biller-related events and storing them in an event tracking database, which is typically associated with the EPCS entity 58, as described in detail below.

### THE EPCS ENTITY

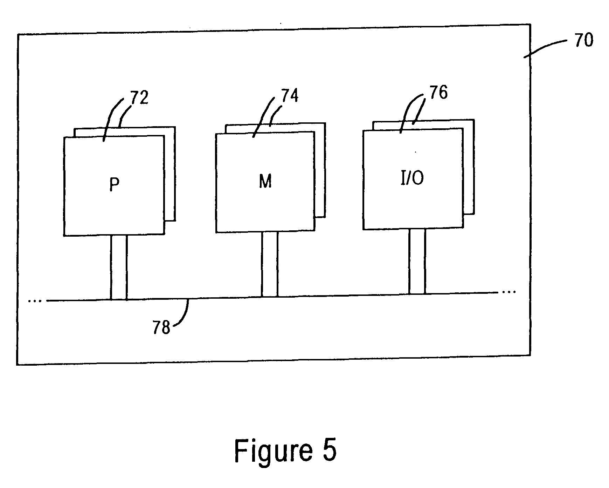

The EPCS entity 58 can generally be described in terms of a data processing system 70, such as shown in Figure 5. The data processing system 70 preferably includes at least one processor (P) 72, memory (M) 74, and input/output (I/O) interface 76, which are connected to each other by a bus 78, for implementing the functions of the EPCS entity 58, as described in detail below.

Referring again to Figure 4, the EPCS entity 58 typically gains access to the system 50 through a network server (not shown). Thus, the database component 32 associated with the EPCS entity 58 can be located in the network server. However, if desired, the database component 32 associated with the EPCS entity 58 can also be located in a system associated with the EPCS entity 58, such as a legacy aggregating system, or in one or among all of the other distributed database entities. Such a legacy aggregating system could be accessed through the external message interface 36 of the EPCS entity 58, as described in detail below.

Wherever it is located, the database component 32 associated with the EPCS entity 58 stores bill payment-specific subscriber profile data, such as subscriber names and addresses, subscriber DDA account numbers, and subscriber credit ratings. The database component 32 also stores bill payment warehouse data, such as user-specific payees, single occurrence payments, and recurring payments/models.

As previously described, both the banking entity 54 and the billing entity 56 track and store events in an event tracking database. This event tracking database is typically located in the database component 32 associated with the EPCS entity 58, and typically includes event summaries and links to other databases, perhaps residing at other entities, which provide event details and/or an audit trail.

The database component 32 associated with the EPCS entity 58 also stores bill payment transaction histories, and system subscriber profile data, such as metadata about subscribers and metadata about subscribers' relationships to other entities, e.g., a list of billers that a subscriber has enabled. The database component 32 further stores billing-related profile information on the system aggregator and billers, such as metadata about billing arrangements, e.g., flat rate, per subscriber, event-driven, etc., and aggregation data, such as new bill availability and messages or special announcements available from the billing entity 56. The database component 32 associated with the EPCS entity 58 may additionally store security data, such as required sign-on information and macro-level authorizations, and customer service data, such as frequently asked questions (FAQ's), FI and biller contact information, and problem resolution data.

The EPCS entity 58 is the entity which ties the distributed database entities together. The EPCS entity 58 accomplishes this by functioning as an integration agent which maintains bill payment profiles and warehouse data, aggregates bill availability and status data, but not bill content or presentation, and maintains an event tracking database, i.e. an audit trail, that can be accessed by all of the database entities. Also, in order to facilitate a single point of sign-on, the EPCS entity 58 functions as the authentication gate keeper. This is not intended to imply that the EPCS entity 58 necessarily maintains user identification numbers and/or passwords. However, it does mean that the EPCS entity 58 accepts sign-on requests and doles out authentication "tickets" in response thereto, in conjunction with the banking entity as described above.

Like user identification numbers and passwords, other data elements, such as event details, may be aggregated at the EPCS entity 58, but may still physically reside in a distributed manner across several of the database entities. The EPCS entity 58 may also route e-mail messages to and from the various database entities, as well as store e-mail messages sent to and from the various database entities.

### INTERNAL MESSAGE PROCESSING

The following types of messages are examples of messages which may be employed to implement an internal message interface 34 in accordance with the present invention. The message specification or file format can be either standard, i.e., open, or special, i.e. proprietary.

### USER ENTITY INTERNAL MESSAGE PROCESSING

Depending upon the nature of the presentation technology being used, e.g., a "fat" client, an HTML browser client, or a Java client, the user entity 52 may need to process an internal message to store a security ticket for later use in gaining access to other distributed database entities in the system 50, and/or to update any resident software. The user entity 52 may also need to process an internal message containing various types of information (assuming a push model), and/or internal e-mail messages, such as those for receiving data from other database entities.

### BANKING ENTITY, INTERNAL MESSAGE PROCESSING

The banking entity 54 will process an internal message to add/update/delete/retrieve FI branding information, and to add/update/delete an entry from a list of billers that have been aggregated. The banking entity 54 will also process an internal message to activate a subscriber for home banking via a messaging protocol, which can be an existing messaging protocol, such as OFX, or a batch process, and to query/update bank subscriber profile data for purposes of customer care. The banking entity 54 will further process an internal message to query bank transaction history for customer care and for linking to the event tracking database, and to retrieve a list of billers available under the FI sponsor umbrella or to place the list of billers available under the FI sponsor umbrella in an aggregation database. Placing the list of billers available under the FI sponsor umbrella allows the EPCS entity 58 to tailor the list by FI sponsor.

The banking entity 54 will additionally process internal e-mail messages such as those for sending data to other database entities, receiving data from other database entities, and broadcasting data to other database entities.

### BILLING ENTITY INTERNAL MESSAGE PROCESSING

The billing entity 56 will process an internal message to add/update/delete/retrieve biller branding information, and to activate a subscriber for electronic bill presentment via a messaging protocol, which can be an existing messaging protocol, for example OFX, or a batch process. The billing entity 56 will also process an internal message to retrieve bill availability data, retrieve bill detail data, and retrieve bill presentation specifications or content. The retrieved data could, for example, be URL links to ads and notices, HTML data, or OFX data.

The billing entity 56 will also process an internal message to query/update biller subscriber profile data for purposes of customer care, and to query biller transaction history for customer care and for linking to the event tracking database. The billing entity 56 will additionally process internal e-mail messages, such as those for sending data to other database entities, receiving data from other database entities, and broadcasting data to other database entities.

### EPCS INTERNAL MESSAGE PROCESSING

The EPCS entity 58 will process internal event tracking messages used to gain access to two types of information in the event tracking database: summary data and a link to another database entry that can provide more detail, such as subscriber enrollment data, subscriber service activation data, e.g., biller, bill payment, banking, etc., sign-on data, bill availability data, bill viewed data, bill payment generated data which is optionally associated with presented bill data, subsequent bill payment events data, e.g., submitted, processed, failed, cleared, remittance received by biller, etc., cross-sell events data, e.g., ad/offer viewed, ad/offer clicked, product/service purchased, terms & conditions viewed data, and e-mail created/read/deleted data.

The EPCS entity 58 will also process internal messages related to subscriber profile data, such as to add/modify/delete/read subscriber profile data, often as a function of the events listed above, e.g., enrollment, activation, etc.

The EPCS entity 58 will additionally process internal security messages. Such internal security messages may relate to authentication, which result in the EPCS entity 58 issuing a security ticket. It should be noted that an authentication request does not have to be received as a result of a subscriber directly contacting the banking entity 54, but may be. initiated if a subscriber attempts to gain access to the billing entity 56, without contacting the banking entity 54. The point being that with a security ticket a subscriber is generally allowed to freely traverse any database entity in the system 50 without going through repeated sign-on procedures.

An internal security message may relate to macro-level authorization, resulting in issuance of a security ticket that includes credentials allowing a subscriber access to a particular billing entity, without addressing micro-level authorization issues such as the operations the subscriber will be allowed to perform.

An internal security message may also result in issuance of a security ticket without authentication. Such a message will originate from a trusted party, e.g., an FI performing its own authentication.

It should be noted that the use of a security ticket enables, but does not mandate, a single sign-on procedure. In other words, a database entity, such as the billing entity 56, may, for whatever reason, require additional authentication information.

The EPCS entity 58 will further process internal messages relating to aggregation data. For example, an EPCS entity 58 will process an internal message to create a link to summary or detailed bill information, or to create a link to message, notice, ad, or some other kind of non-bill information that is available from the billing entity 56.

Furthermore, the EPCS entity 58 will process an internal message to query/update bill payment transaction history for purposes of customer care. The EPCS entity 58 will process internal e-mail messages, such as those associated with routing e-mail, picking-up e-mail, and querying an e-mail mailbox. The EPCS entity 58 may also process internal messages related to data mining. Such messages are handled very carefully to ensure privacy, perhaps even providing an ACL or other mechanisms to ensure privacy. The results of such messages may be delivered out of band, e.g., by batch.

### EXTERNAL MESSAGE PROCESSING

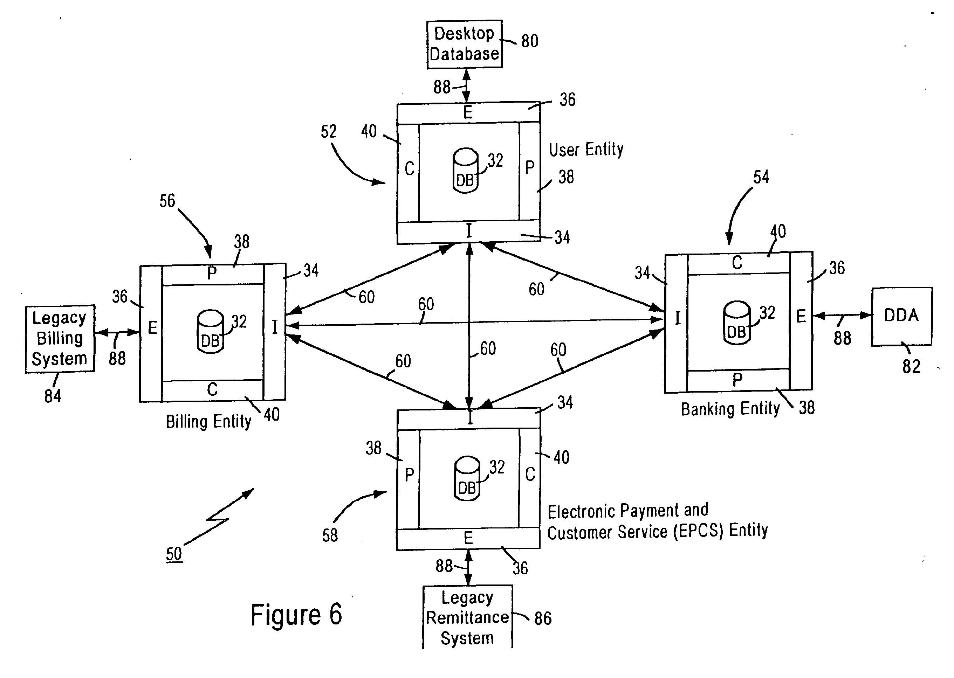

Referring to Figure 6, there is shown a schematic diagram of the versatile electronic bill presentment and payment system 50, along with certain associated directly related systems. The directly related systems includes a desktop database 80, a DDA system 82, a legacy billing system 84, and a legacy remittance system 86. The communications between the various database entities and their associated directly related systems are performed over interconnections 88, which can be wire, optical fiber, or wireless based interconnections. The message specification or file format can be either standard, i.e., open, or special, i.e. proprietary.

### USER ENTITY, EXTERNAL MESSAGE PROCESSING

Depending upon the nature of the presentation technology being used, e.g., a "fat" client, an HTML browser client, or a Java client, the user entity 52 may need to process an external message in order to communicate with a related system, such as the desktop database 80. To support a system, it may be necessary to implement the external message interface 36 of the user entity 52 using an existing, and possibly extended, protocol specification, such as Gold, NPC, or OFX, as will be understood by those skilled in the art.

### BANKING ENTITY EXTERNAL MESSAGE PROCESSING

The banking entity 54 will process external messages to and from a related system, such as the DDA system 82, in order to query and update information, for example subscriber profile data, subscriber account data, out-of-band (e.g., ATM) account activity and statement history. It may also be desirable for the banking entity 54 to interface with other banking systems (e.g., stops).

### BILLING ENTITY EXTERNAL MESSAGE PROCESSING

The billing entity 56 will process external messages to and from related systems, such as the legacy billing system 84, in order to query and update information, for example subscriber profile data, subscriber account data, account activity and statement history. Most of this data is industry, if not biller, specific.

### EPCS EXTERNAL MESSAGE PROCESSING

The EPCS entity 58 will process external messages to and from related systems, such as the legacy remittance system 86. The legacy remittance system 86 could, for example, be an ACH, RPP, RPS, or Direct Send, as will be well understood by those skilled in the art.

### PARTNER MESSAGE PROCESSING

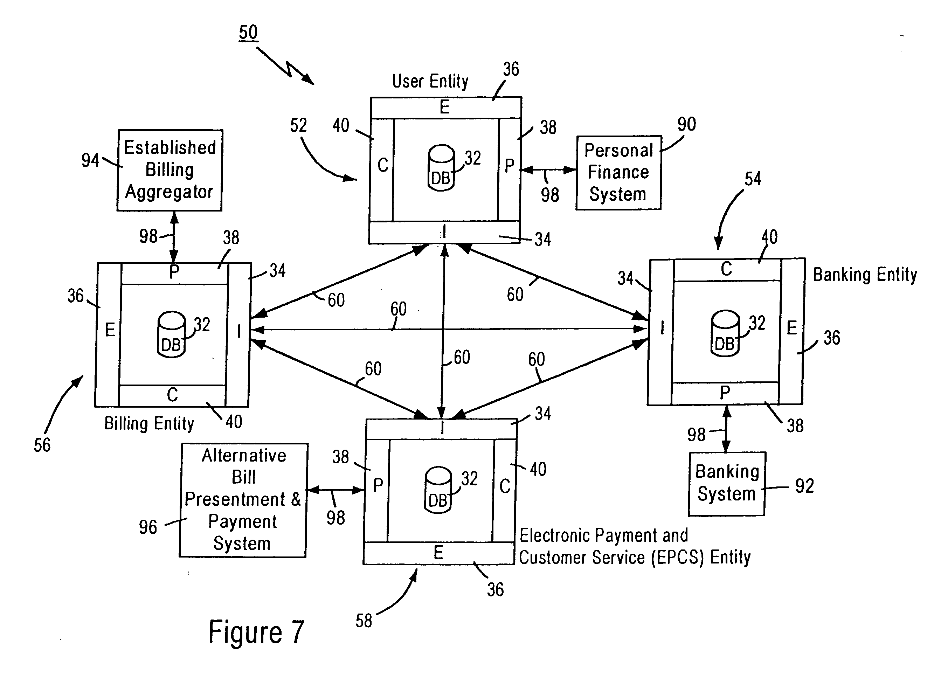

Referring to Figure 7, there is shown a schematic diagram of the versatile electronic bill presentment and payment system 50, along with some associated indirectly related systems. The indirectly related systems includes a personal finance system 90, a banking system 92, an established billing aggregator 94, and an alternative bill presentment and payment system 96. The communications between the various database entities and the indirectly related systems are performed over interconnections 98, which can be wire, optical fiber, or wireless interconnections. The message specification or file format can be either standard, i.e., open, or special, i.e. proprietary.

### USER ENTITY PARTNER MESSAGE PROCESSING

Depending upon the nature of the presentation technology being used, e.g., a "fat" client, an HTML browser client, or a Java client, the user entity 52 may need to process a partner message in order to communicate with a partner, such as the personal finance system 90. The personal finance system 90 could, for example, be a personal financial manager (PFM) software package such as Quicken (TM) or Money (TM).

### BANKING ENTITY PARTNER MESSAGE PROCESSING

The banking entity 54 will process partner messages to and from a partner, such as the banking system 92.

### BILLING ENTITY PARTNER MESSAGE PROCESSING

The billing entity 56 will process partner messages to and from a partner, such as the established billing aggregator 94. Such a partner relationship may be required if a large group of subscribers are using the established billing aggregator 94, and thereby have the leverage to demand that all of their bills be communicated through the established billing aggregator 94.

The established billing aggregator 94 is essentially treated as a proxy for the billers that it represents. Thus, subscribers to the system 50 through the established billing aggregator 94 are treated in the same manner as direct subscribers to the system 50. This means that subscribers to the established billing aggregator 94 will receive the same event tracking, customer service, and payment processing functionality as direct subscribers to system 50.

To present a bill generated by the established billing aggregator 94 the system 50 may, for example, receive bill availability data and the URL of a web server of the established billing aggregator 94. The billing entity 56 stores detailed bill data on the web server of the established billing aggregator 94 so that subscribers may obtain an HTML presentation of detailed bill data from the aggregator bill server. In this scenario, the partner message interface 38 would be essentially the same as an internal message interface 34, but could, if desired, have added bulk transfer capability.

### EPCS PARTNER MESSAGE PROCESSING

The EPCS entity 58 will process partner messages to and from a partner, such as the alternative bill presentment and payment system 96. Such a partner relationship may be required if a billing entity 56 has a subscriber base that includes both subscribers to the system 50 and subscribers to the alternative bill presentment and payment system 96.

In such a case, the system 50 could function as a billing aggregator for the alternative bill presentment and payment system 96, or vice-versa. The alternative bill presentment and payment system 96 and its subscribers might not receive any of the benefits of the messaging functionality provided by the present system 50. Only limited functionality might be provided. That is, the partner message interface 38 might only provide the functionally required to present bills through the alternative bill presentment and payment system 96. As will be recognized by those skilled in the art, the EPCS entity 58 will typically require capabilities of a billing entity 56 in order to present bills to and from the alternative bill presentment and payment system 96.

### CUSTOMER CARE MESSAGE PROCESSING

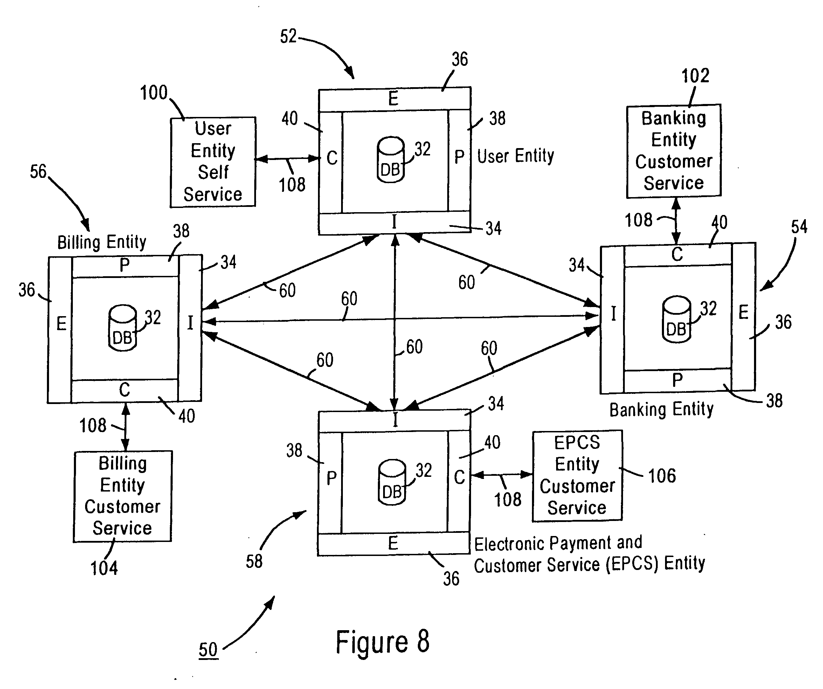

Referring to Figure 8, there is shown a schematic diagram of the versatile electronic bill presentment and payment system 50, along with certain associated customer care entities. The customer care entities include a user entity self service center 100, a banking entity customer service center 102, a billing entity customer service center 104, and an EPCS customer service center 106. The communications between the various database entities and their associated customer care entities are performed over interconnections 108, which can be wire, optical fiber, or wireless interconnections. The message specification or file format can be either standard, i.e., open, or special, i.e. proprietary.

### USER ENTITY CUSTOMER CARE MESSAGE PROCESSING

Depending upon the nature of the presentation technology being used, e.g., a "fat" client, an HTML browser client, or a Java client, the user entity 52 may need to process a customer care message in order to communicate with a customer care entity, such as the user entity self service center 100. The user entity self service center 100 could, for example, be a self service diagnostic tool.

### BANKING ENTITY CUSTOMER CARE MESSAGE PROCESSING

The banking entity 54 will process customer care messages from a customer care entity, such as the banking entity customer service center 102. A customer care message may be a request for data or a request to modify existing data. Such customer care messages are processed by providing the requested data or providing a confirmation that the existing data has been modified to the banking entity customer service center 102. The banking entity customer service center 102 could, for example, be a third party telemarketing group that is allowed access to banking and overall system data in order to provide feedback to system subscribers.

### BILLING ENTITY CUSTOMER CARE MESSAGE PROCESSING

The billing entity 56 will process customer care messages from a customer care entity, such as the billing entity customer service center 104. A customer care message may be a request for data or a request to modify existing data. Such messages are processed by providing the requested data or providing a confirmation that the existing data has been modified to the billing entity customer service center 104. The billing entity customer service center 104 could, for example, be a third party telemarketing group that is allowed access to billing and overall system data in order to provide feedback to system subscribers.

### EPCS CUSTOMER CARE MESSAGE PROCESSING

The EPCS entity 58 will process customer care messages from a customer care entity, such as the EPCS entity customer service center 106. A customer care message may be a request for data or a request to modify existing data. Such messages are processed by providing the requested data or providing a confirmation that the existing data has been modified to the EPCS entity customer service center 106. The EPCS entity customer service center 106 could, for example, be a third party telemarketing group that is allowed access to event and overall system data in order to provide feedback to system subscribers.

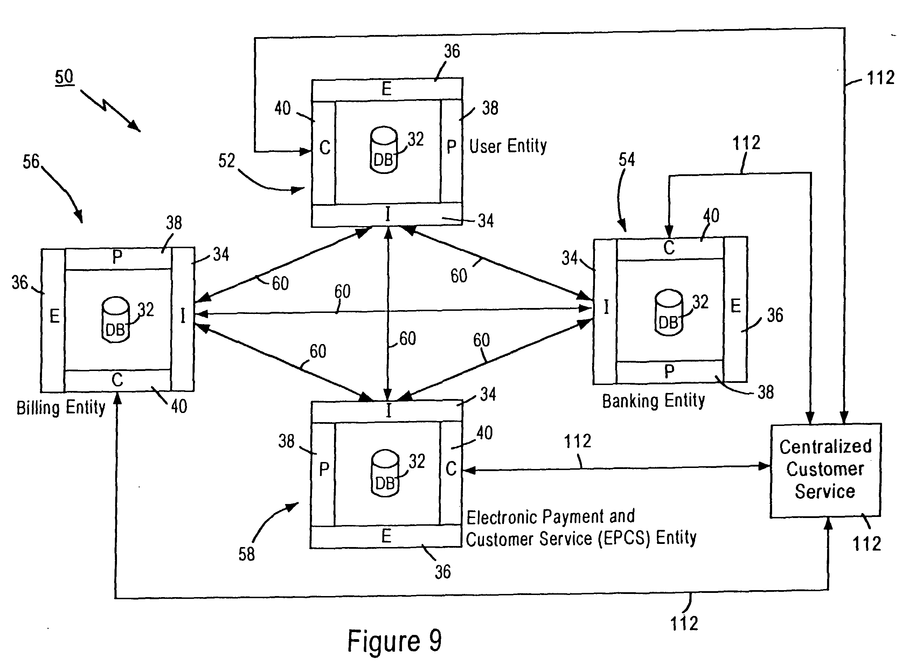

It should be noted that all of the customer care entities described above could, if desired, be consolidated into a centralized customer service center 110, as shown in Figure 9. In such a case, each of the database entities would process customer care messages to and from the centralized customer service center 110 in a manner similar to that described above. Communications between the various database entities and the centralized customer service center 110 would be performed over interconnections 112, which may be wire, optical fiber, or wireless interconnections.

### MESSAGE FLOW

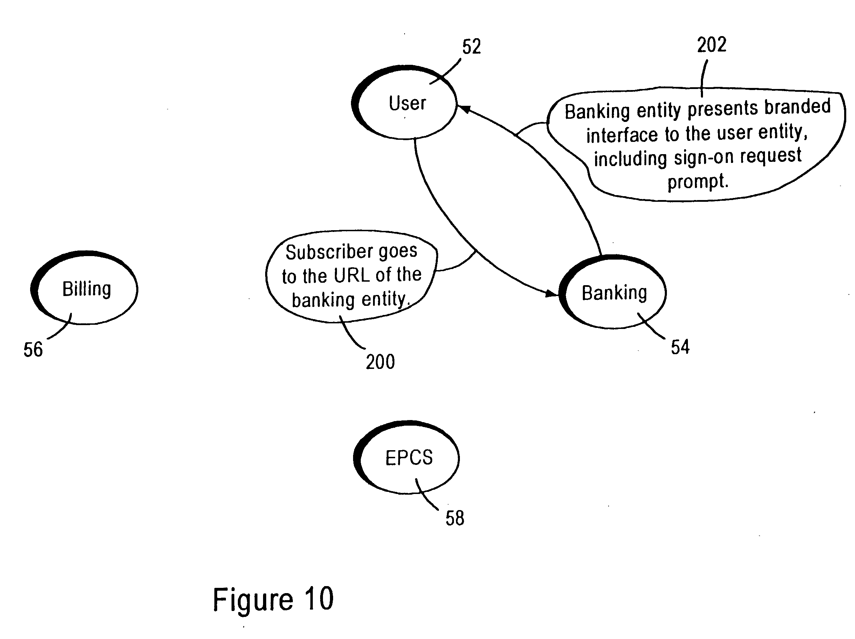

Referring to Figures 10-15, there are shown flowchart diagrams of data and message flows between the various entities within the system 50. These flowchart diagrams assume that the user entity 52 is an HTML browser client, the banking entity 54 is the primary point of presence for a subscriber to the system 50, the billing entity 56 controls bill presentment, and the EPCS entity 58 controls bill payment.

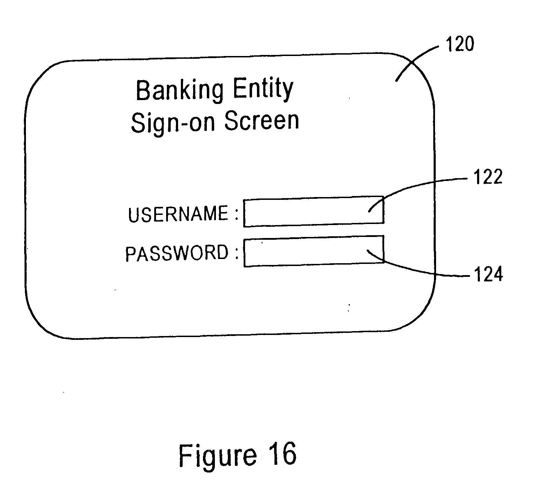

In Figure 10, a subscriber at the user entity 52 accesses the web site of the banking entity 54 in step 200. In return, the banking entity 54 presents a branded interface to the user entity 52, including a sign-on request prompt in step 202. Figure 16 shows an example of such a branded interface 120, wherein the sign-on request prompt includes a username field 122 and a password field 124.

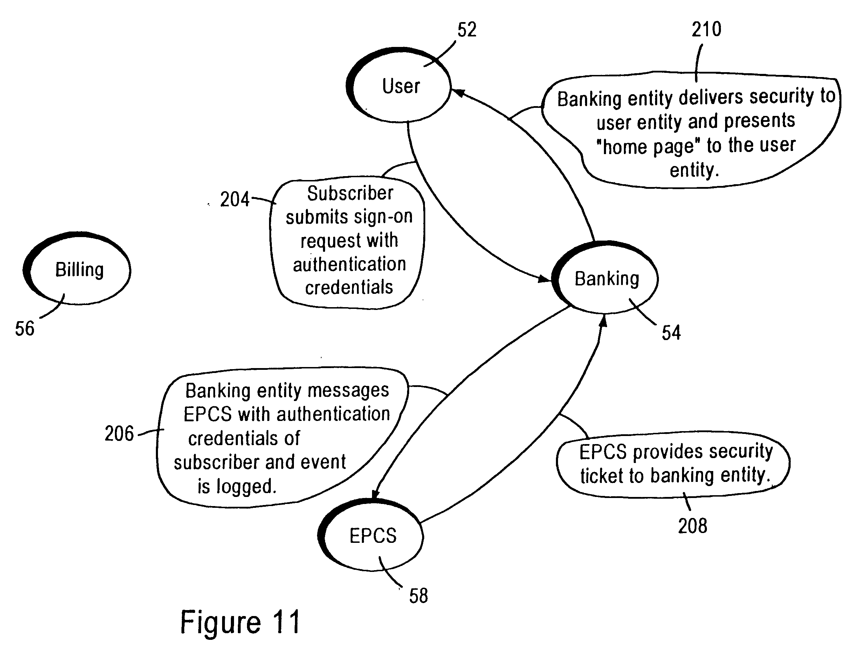

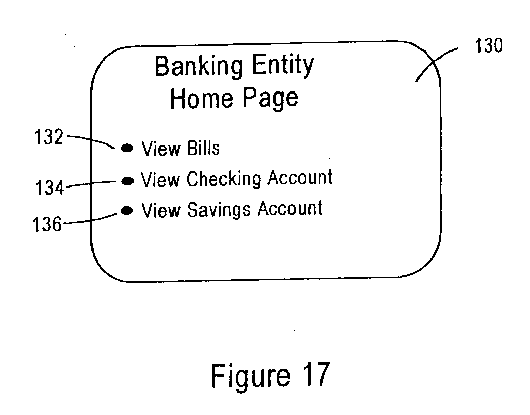

In Figure 11, the user entity 52 submits a sign-on request with authentication credentials in steps 204. The banking entity 54 messages the EPCS entity 58 with the authentication credentials of the subscriber and the event is logged in step 206. The EPCS entity 58 provides a security ticket to the banking entity 54 in step 208. The banking entity 54 delivers the security ticket to the user entity 52 and presents its "home page" to user entity 52 in step 210. Figure 17 shows an example of such a home page 130, which includes a "view bills" icon 132, a "view checking account" icon 134, and a "view savings account" icon 136.

It should be noted that either the EPCS entity 58 or the banking entity 54 could perform the authentication procedure. In either case the event is logged in the event tracking database.

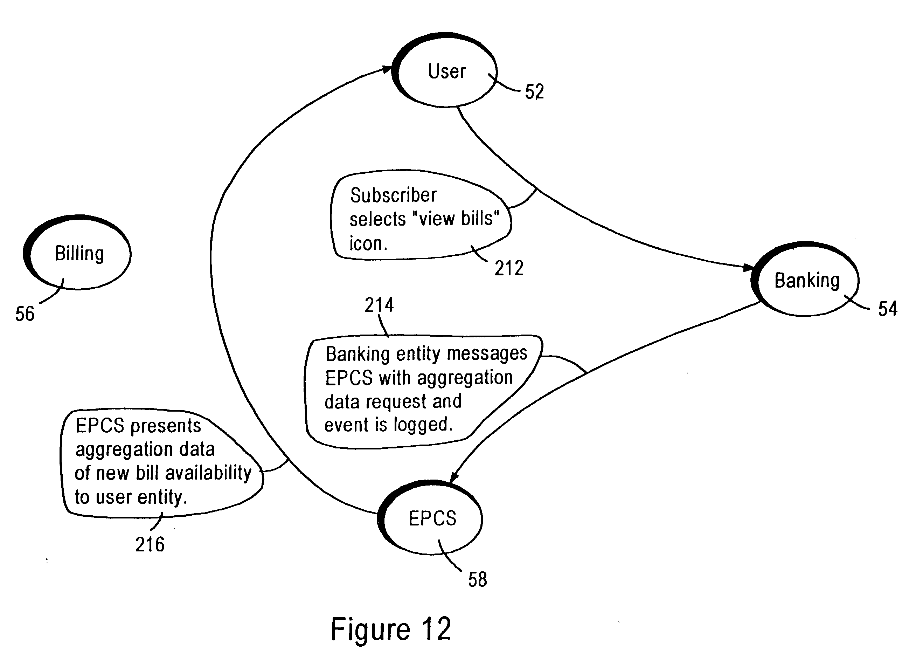

In Figure 12, the subscriber selects the "view bills" icon 132 in step 212. The banking entity 54 messages the EPCS entity 58 with an aggregation data request and the event is logged in step 214. The EPCS entity 58 presents aggregation data of bill availability to user entity 52 in step 216.

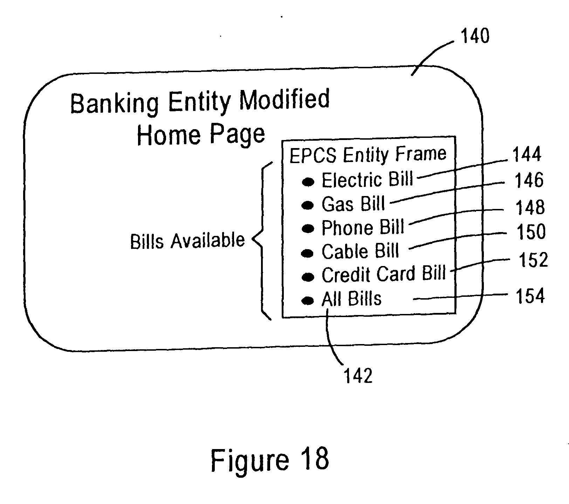

Figure 18 shows a modified home page 140 having an EPCS entity frame 142 presenting the bill availability data, which includes an "electric bill" icon 144, a "gas bill" icon 146, a "phone bill" icon 148, a "cable bill" icon 150, a "credit card bill" icon 152, and an "all bills" icon 154 which allows all bills to be presented simultaneously, albeit in separate frames.

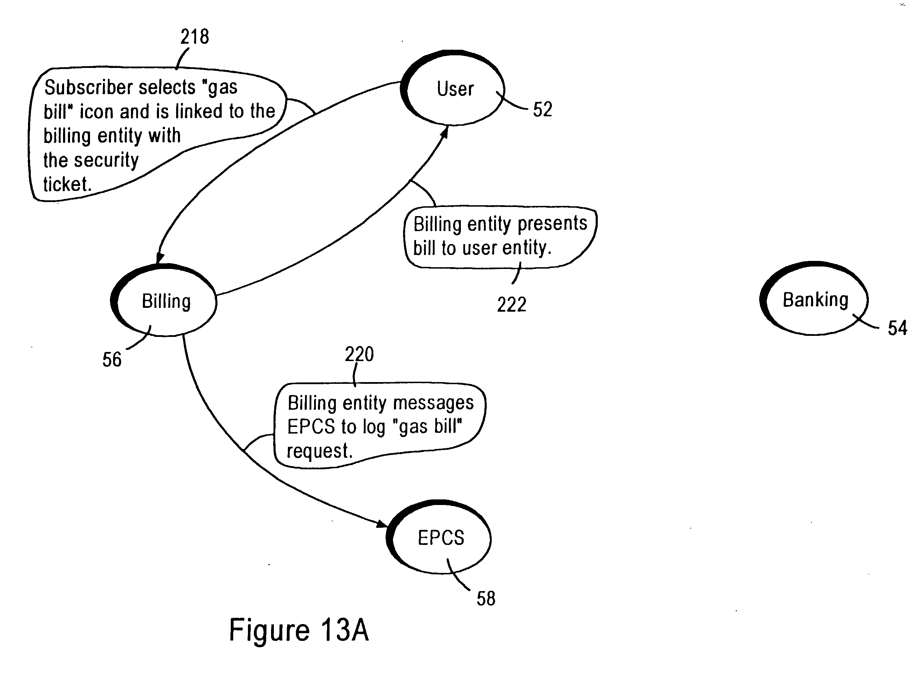

In Figure 13A, the subscriber selects the "gas bill" icon 146 and is linked to the billing entity 56. The security ticket is transmitted in step 218. The billing entity 56 messages the EPCS entity 58 to log the "view bill" request event in step 220. The billing entity 56 presents detailed bill data to the user entity 52 in step 222.

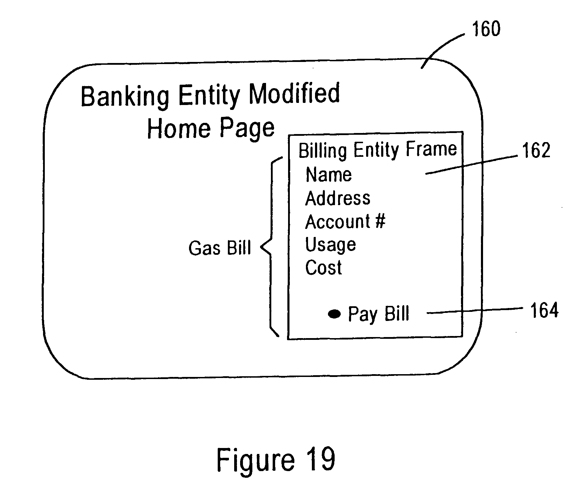

Figure 19 shows another modified home page 160 having a billing entity frame 162 presenting the detailed bill data, which includes the subscriber name, subscriber address, account number, usage, and cost, and a "pay bill" icon 164.

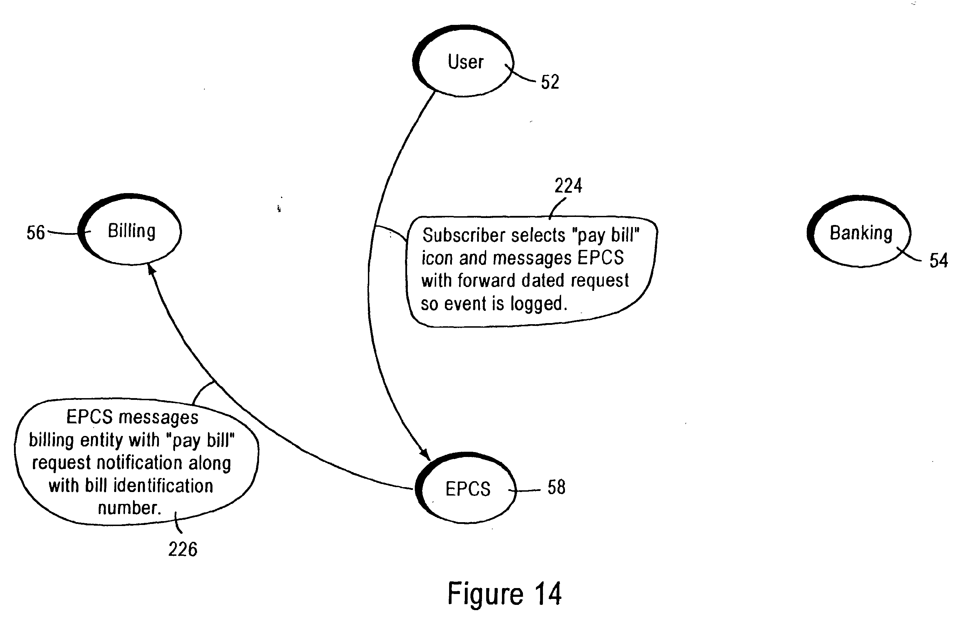

In Figure 14, the subscriber selects the "pay bill" icon 164 and messages the EPCS entity 58 with a forward dated pay bill request. The event is logged in step 224. The EPCS entity 58 messages the billing entity 56 with a pay bill request notification along with a bill identification number in step 226.

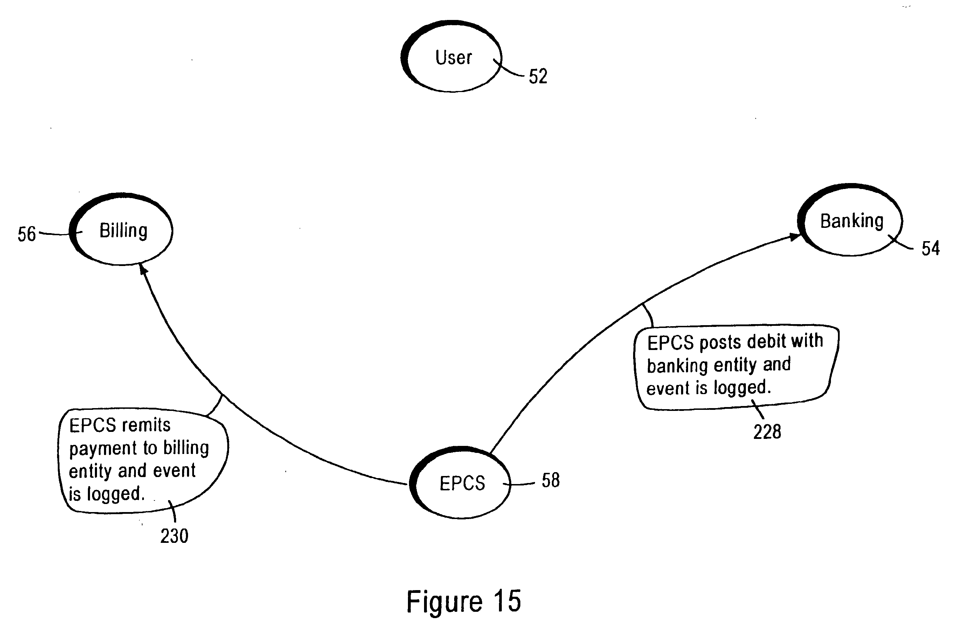

In Figure 15, the EPCS posts a debit with the banking entity 54, and the event is logged in step 228. The EPCS entity 58 then remits a payment to the billing entity 56 and the event is logged in step 230.

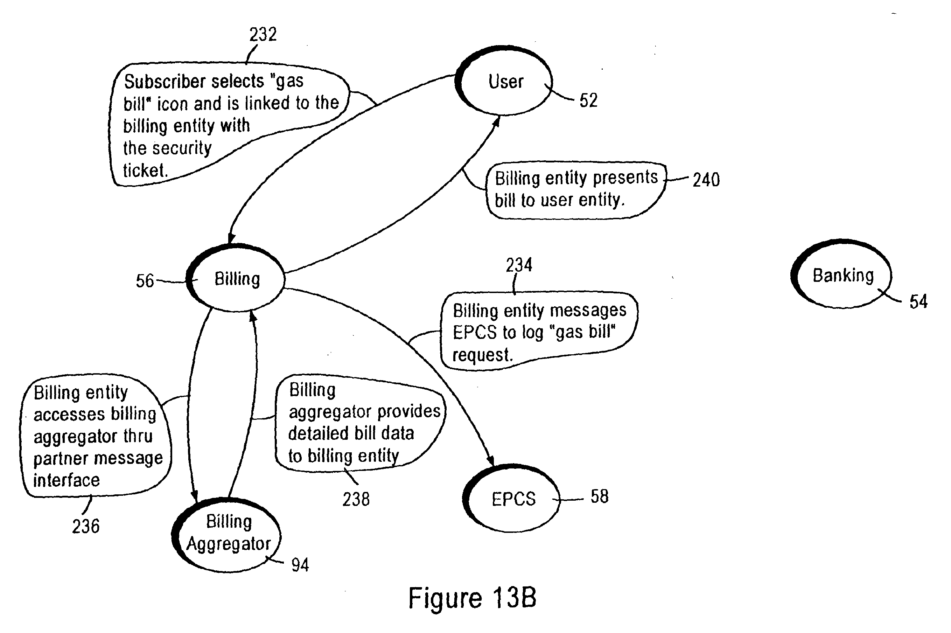

Figure 13B can be substituted for Figure 13A in the above-described sequence of flowchart diagrams if detailed bill data is provided by the established billing aggregator 94 thru the partner message interface 38 of the billing entity 56. As shown, the subscriber again selects the "gas bill" icon 146 and is linked to the billing entity 56. The security ticket is transmitted in step 232. The billing entity 56 again messages the EPCS entity 58 to log the "view bill" request event in step 234. However, in this case, detailed bill data is available only from the established billing aggregator 94. Thus, the billing entity 56 accesses the established billing aggregator 94 through its partner message interface 38 in step 236. In response, the established billing aggregator 94 provides detailed bill data to the billing entity 56 in step 238. The billing entity 56 then presents the detailed bill data to the user entity 52 in step 240.

It should be noted that, if desired, the established billing aggregator 94 could present the detailed bill data directly to the user entity 52.

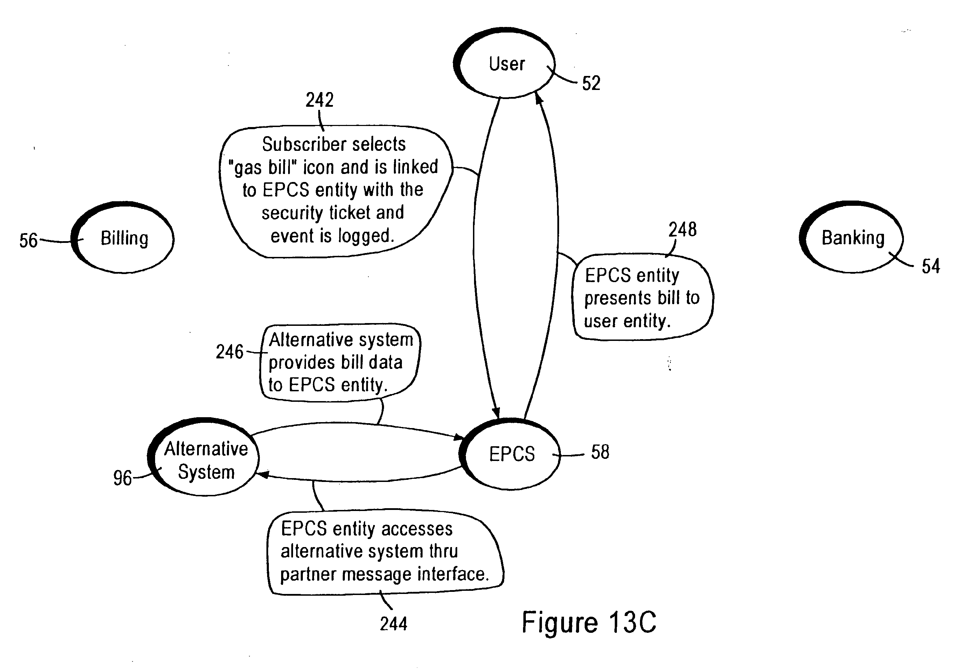

Figure 13C can be substituted for Figure 13A in the above-described sequence of flowchart diagrams if detailed bill data is provided by the alternative bill presentment and payment system 96 thru the partner message interface 38 of the EPCS entity 58. As shown, the subscriber selects the "gas bill" icon 146 and is linked back to the EPCS entity 58. The security ticket is transmitted and the event is logged in step 242.

In this case, detailed bill data is available only from the alternative bill presentment and payment system 96. Thus, the EPCS entity 58 accesses the alternative bill presentment and payment system 96 through its partner message interface 38 in step 244. In response, the alternative bill presentment and payment system 96 provides detailed bill data to the EPCS entity 58 in step 246. The EPCS entity 58 then presents the detailed bill data to the user entity 52 in step 248.

Alternatively, detailed bill data could, if desired, be provided by the alternative bill presentment and payment system 96 thru the partner message interface 38 of the billing entity 56 in a manner similar to that as described in Figure 13B.

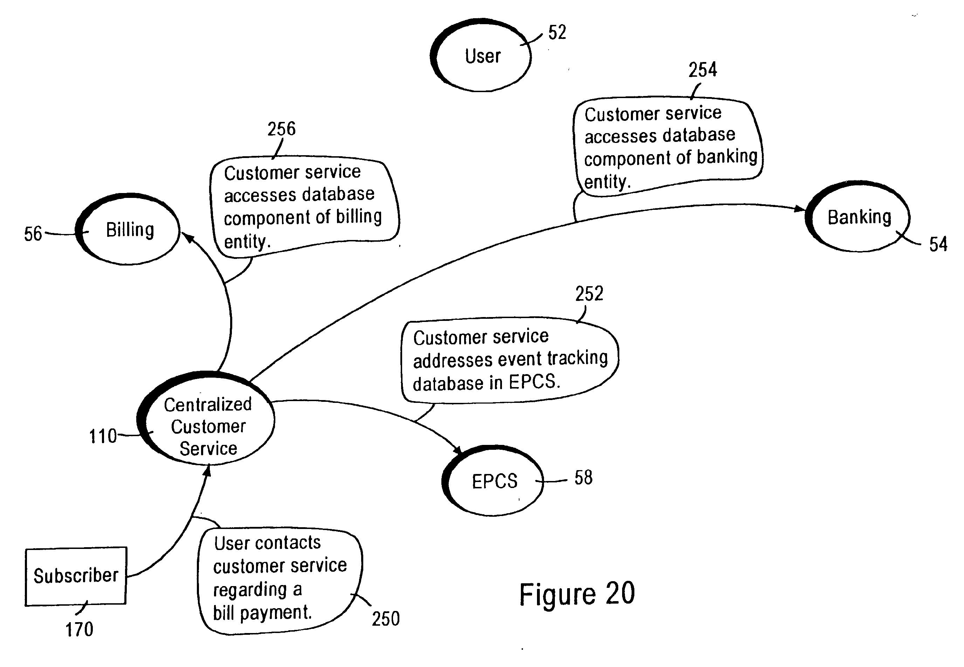

Referring to Figure 20, there is shown a flowchart diagram of data and message flows between the centralized customer service center 110 and the various entities within the system 50. A subscriber 170 contacts the centralized customer service center 110 regarding a bill payment in step 250. The centralized customer service center 110 accesses the event tracking database in the EPCS entity 58 to see if a view bill, pay bill, remit payment, or debit posting event has been logged in step 252. If more detailed information regarding, for example, the posting of a debit for a bill is required, the centralized customer service center 110 can access the database component 32 associated with the banking entity 54, as shown in step 254. Similarly, if more detailed information regarding, for example, the remitting of a payment for a bill is required, the centralized customer service center 110 can access the database component 32 associated with the billing entity 56, as shown in step 256. Although not shown, the EPCS entity 58 can log all of the above-described accesses performed by centralized customer service center 110.

As is apparent from the foregoing description, the system 50 allows a subscriber to interact directly with individual billers while retaining the benefits of interacting with a single aggregator, such as a single authentication and log-in procedure and a common bill presentation framework. The system 50 also allows a subscriber to interact with a single aggregator while allowing the billers and banks to retain control of subscriber-related data and a communication channel with each subscriber.

The present invention is not to be limited in scope by the specific embodiments described herein. Indeed, various modifications of the present invention in addition to those described herein, will be apparent to those of skill in the art from the foregoing description and accompanying drawings. Thus, such modifications are intended to fall within the scope of the appended claims.

## Claims

1. A method for accessing data over a network having a plurality of network stations, the method comprising the steps of:
storing, at a first of the plurality of network stations, information that identifies data which is available at a second of the plurality of network stations, the second network station being different than the first network station;
generating, at the first network station, a signal representing both the information that identifies the available data and linking information to the second network station; and
transmitting the signal to a third of the plurality of network stations, the third network station being different than the first and the second network stations;
wherein the transmitted linking information is operable at the third network station to establish a network link over which the identified available data is transmittable from the second network station to the third network station.

2. The method according to claim 1, further comprising the steps of:
receiving a request for the information that identifies the available data, wherein the signal is generated responsive to the responsive to the request; and
logging the request.

3. The method according to claim 1, further comprising the steps of:
operating on the transmitted linking information at the third network station to establish the network link;
receiving, at the second network station, a request for the identified available data from the third network station via the established network link;
receiving, at the first network station, a notification of the receipt of the request for the identified available data from the second network station; and
logging the notification.

4. The method according to claim 1, further comprising the steps of:
operating on the transmitted linking information at the third network station to establish the network link;
transmitting, from the second network station, the identified available data to the third network station via the established network link;
receiving, at the first network station, a notification that the identified available data was transmitted from the second network station to the third network station; and
logging the notification.

5. The method according to claim 1, wherein the identified available data is identified available first data, wherein the linking information is first linking information, wherein the network link is a first network link, further comprising the steps of:
storing, at the first network station, further information that identifies second data which is available at a fourth of the plurality of network stations, the fourth network station being different than the first, the second, and the third stations;
wherein the generated signal further represents both the further information that identifies the available second data and second linking information to the fourth network station;
wherein the transmitted second linking information is operable at the third network station to establish a second network link over which the identified available second data is transmittable from the fourth network station to the third network station.

6. The method according to claim 5, further comprising the step of:
operating on the transmitted first linking information at the third network station to establish the first network link, and on the transmitted second linking information at the third network station to establish the second network link;
receiving, at the second network station, a request for the identified available first data from the third network station via the established first network link and, at the fourth network station, a request for the identified available second data from the third network station via the established second network link;
receiving, at the first network station, a first notification of the receipt of the request for the identified available first data from the second network station, and a second notification of the receipt of the request for the identified available second data from the fourth network station; and
logging the first and the second notifications.

7. The method according to claim 5, further comprising the steps of:
operating on the transmitted first linking information at the third network station to establish the first network link, and on the transmitted second linking information at the third network station to establish the second network link;
transmitting, from the second network station, the identified available first data to the third network station via the established first network link and, from the fourth network station, the identified available second data to the third network station via the established second network link;
receiving, at the first network station, a first notification that the identified available first data was transmitted from the second network station to the third network station, and a second notification that the identified available second data was transmitted from the fourth network station to the third network station; and
logging the first notification and the second notification.

8. The method according to claim 5, wherein the request includes an identification of a user and further comprising the steps of:
receiving a request from a user for the information that identifies the available first data and the available second data, wherein the signal is generated responsive to the responsive to the request; and
authenticating the user;
wherein the signal is generated after the user is authenticated.

9. A method for electronically presenting and paying bills in a network having a plurality of network stations, the method comprising the steps of:
storing, at a first of the plurality of network stations, information identifying a bill which is available at a second of the plurality of network stations, the second network station being different than the first network station;
receiving, from a third of the plurality of network stations, a request for the information identifying the available bill, the third network station being different than the first and the second network stations;
authenticating the request from the third network station;
generating, at the first network station, a signal representing the information identifying the available bill and linking information to the second network station, the linking information being operative at the third network station to establish a network link over which the identified available bill is transmittable from the second network station to the third network station;
transmitting the signal to the third network station;
receiving, at the first network station, a notification that the identified available bill was transmitted from the second network station to the third network station; and
logging at least one of the request receipt and the notification.

10. An system for accessing data over a network having a plurality of network stations, comprising:
a storage device configured to store, at a first of the plurality of network stations, information identifying data which is available at a second of the plurality of network stations, the second network station being different than the first network station; and
a processor configured to generate, at the first network station, a signal representing the information identifying the available data and linking information to the second network station, and to transmit the signal to a third of the plurality of network stations, the third network station being different than the first and the second network stations;
wherein the transmitted linking information is operable at the third network station to establish a network link over which to communicate a request from the third network station to the second network station for the identified available data.

11. The system according to claim 10, wherein:
the processor is further configured to receive a request for the data from the third network station and to log the request; and
the signal is generated responsive to the receipt of the request.

12. The system according to claim 10, wherein:
the processor is further configured to receive a notification that the identified available data was transmitted from the second network station to the third network station and to log the notification.

13. The system according to claim 10, wherein:
the identified available data is identified available first data;
the linking information is first linking information;
the network link is a first network link;
the storage device is further configured to store further information identifying second data which is available at a fourth of the plurality of network stations, the fourth network station being different than the first, the second, and the third network stations;
the processor is further configured to generate the to additionally represent the further information identifying the available second data and second linking information to the fourth network station;
wherein the transmitted second linking information is operable at the third network station to establish a second network link over which to communicate a request from the third network station to the fourth network station for the identified available second data.

14. The system according to claim 13, wherein:
the processor is further configured to receive a first notification that the identified available first data was transmitted from the second network station to the third network station and a second notification that the identified available second data was transmitted from the fourth network station to the third network station, and to log the first and the second notifications.

15. The system according to claim 13, wherein:
wherein the processor is further configured to receive a first notification of a receipt of a request for the identified available first data from the second network station, and a second notification of a receipt of a request for the identified available second data from the fourth network station, and to log the first and the second notifications.

16. An system for electronically presenting and paying bills in a network having a plurality of network stations, comprising:
a storage device configured to store, at a first of the plurality of network stations, information identifying a bill which is available at a second of the plurality of network stations, the second network station being different than the first network station; and
a processor configured to receive, from a third of the plurality of network stations, a request for the information identifying the available bill, the third network station being different than the first and the second network stations, to authenticate the request from the third network station, to generate a signal representing the information identifying the available bill and linking information to the second network station, to transmit the signal to the third network station, to receive a notification that the identified available bill was transmitted from the second network station to the third network station, and to log at least one of the request receipt and the notification.
